# EUROPEAN PATENT SPECIFICATION

(11) **EP 3 714 742 B1**
(45) Date of publication and mention of the grant of the patent: **01.09.2021**
(21) Application number: 20177601.0
(22) Date of filing: 29.05.2020
(51) Int. Cl.: A47J 31/36

(54) **BREWING DEVICE FOR PRODUCING A BEVERAGE FROM A SINGLE-SERVE CAPSULE**
GETRÄNKEZUBEREITUNGSVORRICHTUNG ZUR ZUBEREITUNG EINES GETRÄNKS MITHILFE EINER PORTIONSKAPSEL
DISPOSITIF D'INFUSION PERMETTANT DE PRODUIRE UNE BOISSON À PARTIR D'UNE CAPSULE PRÉEMBALLÉE

(30) Priority: 31.07.2019 IT 201900013452; 22.03.2019 EP 19164740
(43) Date of publication of application: 30.09.2020
(73) Proprietor: SAGA COFFEE S.p.A., 40041 Gaggio Montano (BO) (IT)
(72) Inventor: FIN, Giuseppe, 40041 GAGGIO MONTANO (BO) (IT)
(74) Representative: Giannini, Manuela

(56) References cited:
- WO-A1-2010/103044
- FR-A1- 2 998 463

## Description

### Technical Field of the Invention

The present invention relates to a brewing device for producing a beverage from a single-serve cartridge containing brewable material and typically in the form of a capsule or pod.

### State of the Art

As is known, brewing devices generally comprise two parts assembled to relatively move along a horizontal axis between an open configuration, in which a cartridge is loadable between the two parts, and a closed configuration, in which the two parts are pressed one against the other and define a brewing chamber therebetween that is adapted to contain the previously loaded cartridge.

Depending upon the type of cartridge, in particular when cartridges are used that need to be perforated to allow pressurised water to be introduces into the cartridge or the beverage to outflow from the cartridge, the brewing devices may be provided, in one or in both the brewing half-chambers, with an extractor having the function to ease pushing away the exhausted cartridge from the brewing half-chamber, whereby discharging the cartridge, when the brewing device returns into the open configuration after producing a beverage.

This function is particularly useful when the brewing half-chamber is provided with a perforator, which the exhausted cartridge tends to remain attached to when the brewing device returns into the open configuration.

It is also known that on the market several types of extractors exist designed to implement this function.

An example is offered by the brewing device disclosed in EP 2 747 610 B1, where the brewing device is intended to be used with cartridges in form of pods having a waterproof casing and the water-injecting assembly comprises a main body, a brewing half-chamber formed in the main body, a perforator carried by an insert integral with the main body and delimiting a central portion of the brewing half-chamber, and a pusher.

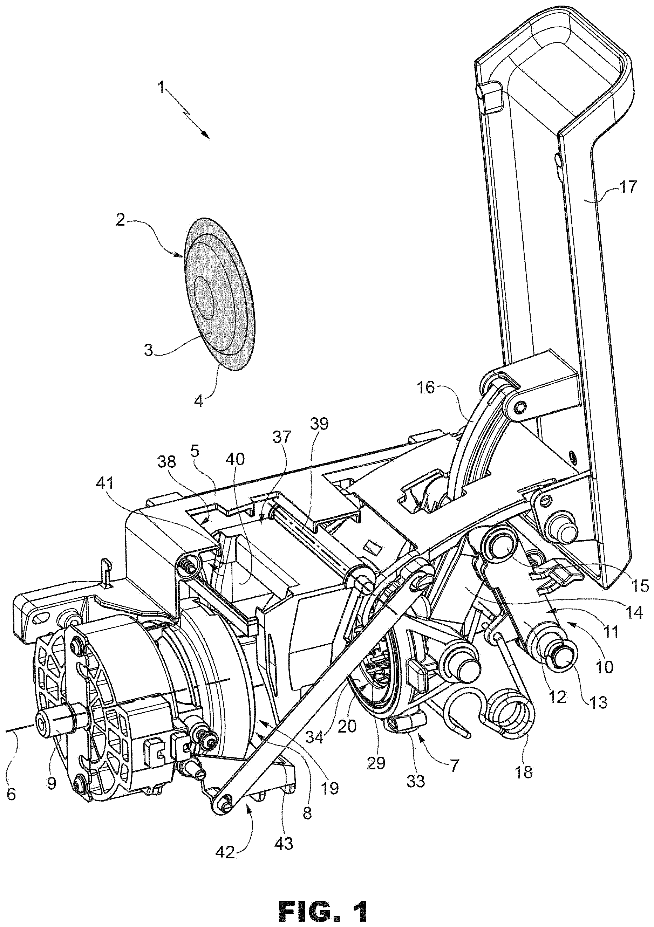

In particular, as shown in Figures 1b and 1c and described in paragraphs [0069] and [0070], the pusher is elastically assembled in a peripheral area of the brewing half-chamber so as to engage the pod, after the beverage dispensing process, at an area of the central body of the pod, and therefore not of the flange, to push the pod away, optionally deforming it, from the perforator.

This solution has the disadvantage of applying to the pod a concentrated and asymmetrical thrust which risks, especially when the pod casing is made of poorly resistant material, in particular when wet, of tearing the pod casing with obvious detrimental consequences.

Another example is offered by the brewing device disclosed in FR 2 998 463 A1, where the extractor comprises two pushers elastically assembled in the middle of the respective half-chambers. The pusher arranged in the brewing half-chamber associated to the beverage outlet side comprises an axial pin, while the pusher arranged in the brewing half-chamber associated to the brewing water inlet side comprises a central pin bearing three radial spokes.

Other solutions comprise continuous rings elastically assembled in the brewing half-chamber. In general, these solutions, while ensuring an even distribution of thrust on the cartridge, are however hardly feasible, as the extractor normally has a significant size and can hardly adapt to several types of cartridges.

### Object and Summary of the Invention

The object of the present invention is to provide a brewing device with an improved extractor.

According to the present invention a brewing device is provided, as claimed in the appended claims.

### Brief Description of the Drawings

The invention will now be described with reference to the enclosed drawings, which show a non-limiting embodiment thereof, wherein:
Figure 1 shows a perspective view, with parts removed for clarity, of a preferred embodiment of the brewing device for producing a beverage of the present invention;
Figure 2 is a longitudinal section of the brewing device of Figure 1 disposed in an open configuration, in which a capsule may be loaded;
Figures 3, 4 and 5 show a perspective view, in an enlarged scale, of corresponding details of the brewing device arranged in the configuration of Figure 2;
Figure 6 is a longitudinal section of the brewing device of Figure 1 arranged in a first closed intermediate configuration;
Figure 7 is a longitudinal section of the brewing device of Figure 1 arranged in a second closed intermediate configuration;
Figure 8 is a longitudinal section of the brewing device of F1 arranged in a beverage extraction closed configuration;
Figures 9 and 10 show a perspective view, in an enlarged scale, of corresponding details of the brewing device arranged in the configuration of Figure 8;
Figure 11 shows the piercing device of Figure 5 and 10;
Figure 12 is a side view of the piercing device of Figure 11;
Figure 13 is a section, along the line XIII-XIII, of Figure 12;
Figure 14 shows a different embodiment of the piercing device of Figures 5 and 10;
Figure 15 is a side view of the piercing device of Figure 14; and
Figure 16 is a section, along the line XVI-XVI, of Figure 15.

### Detailed Description of Preferred Embodiments of the Invention

The present invention will now be described in detail referring to the enclosed Figures to allow a person skilled in the art to implement it and use it. Various changes to the described embodiments will be immediately apparent to the skilled person and the general principles described may be applied to other embodiments and applications without departing from the protection scope of the present invention, as defined in the enclosed claims. Therefore the present invention is not to be intended as limited to the described and illustrated embodiments, but it is to be granted the widest protection scope in compliance with the principles and the characteristics herein described and claimed.

In Figure 1, a brewing device for producing a beverage from a single-serve pod 2 containing a brewable material such as, for example, ground coffee, is overall indicated by reference numeral 1.

The pod 2 is a known type of pod comprising a casing formed of two sheets of plastic and/or aluminium or paper mutually coupled to form a compact central body 3 containing a certain amount of a brewable material, for example ground coffee, and having a generally lenticular shape, and an outer annular flange 4 that extends around, and seals, the central body 3.

Preferably, the pod 2 has a shape that is symmetrical with respect to a central plane containing the flange 4 and with respect to an axis 2A perpendicular to said central plane and passing through the centre of the central body 3. Preferably, furthermore, the central body 3 and the flange 4 have a circular shape.

The brewing device 1 is structured to carry out an automatic brewing process, known in itself, namely a brewing process which provides injecting hot pressured water from a side of the pod 2, which was previously fluid-tightly closed inside a brewing chamber, and extracting the beverage from the opposite side the pod 2.

The brewing device 1 is configured to be connected to a source of hot pressured water and can be integrated in a machine for producing beverages intended for home and office use, as in the case of the example described in the present specification and illustrated in the appended claims, or it can be assembled inside a beverage vending machine.

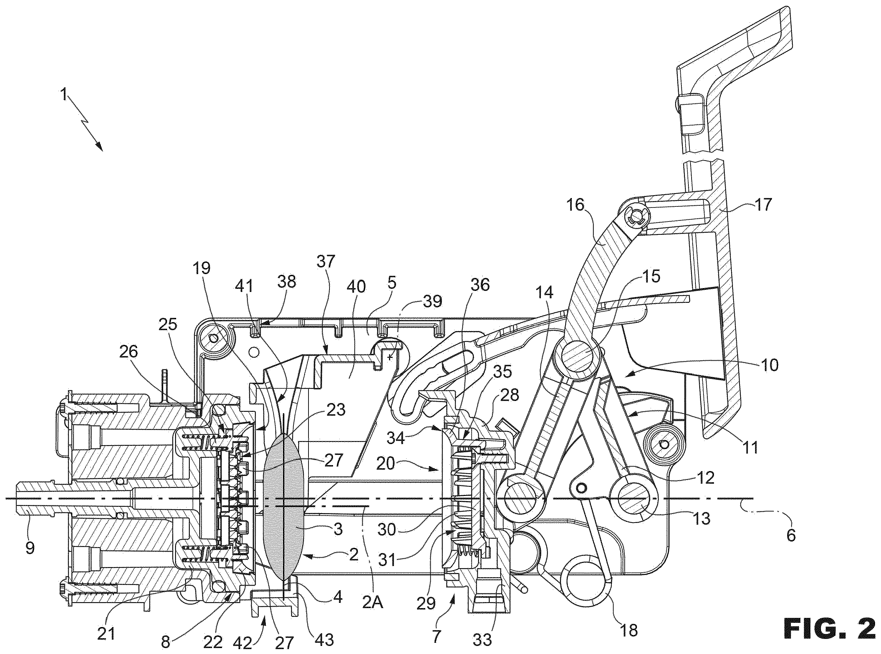

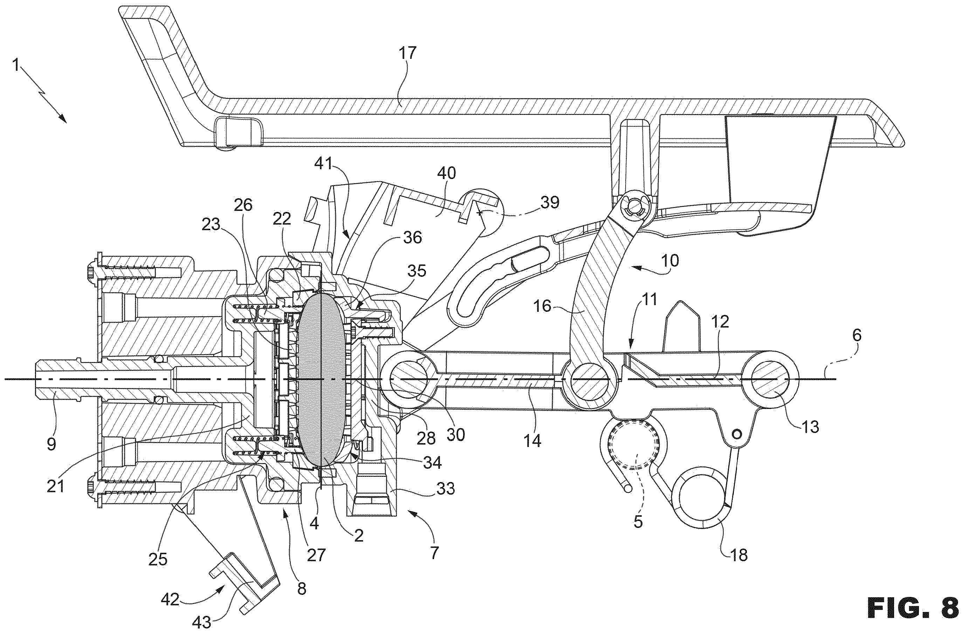

According to what illustrated in figures 1 and 2, the brewing device 1 comprises a frame 5 composed of two half-shells (only one of which is illustrated) removably assembled between each other. The brewing device 1 further comprises two functional assemblies, which are supported by the frame 5, are each other opposite and aligned along a substantially horizontal axis 6, and are mutually movable to make the brewing device 1 assume an open configuration (Figure 1), wherein the two functional assemblies are spaced out such to define a gap between them for loading a pod 2, and a closed configuration (Figure 8), wherein the two functional assemblies are coupled and define the aforesaid brewing chamber.

The two functional assemblies comprise an injection assembly 7 having the function of supplying hot pressured water to the pod 2 enclosed in the brewing chamber, and an extraction assembly 8 having the function of conveying the beverage extracted from the pod 2 to an outlet duct 9 obtained in the extraction assembly 8 and fluidically communicating, by a (not illustrated) flexible duct, with a (not illustrated) beverage dispensing nozzle.

According to a preferred embodiment, as that illustrated in the enclosed figures, the extraction assembly 8 is fixedly assembled on the frame 5, while the injection assembly 7 is movable, upon thrust of a drive mechanism 10, along axis 6, between the retracted position, which corresponds to the open configuration of the brewing device 1, and an advanced position, which corresponds to the closed configuration of the brewing device 1.

The drive mechanism 10 is of the manual type and comprises a toggle-joint mechanism 11 arranged between the injection assembly 7 and a longitudinal end of the frame 5 and comprising a crank 12 hinged to the frame 5 to rotate about a pin 13 horizontal and transverse to the axis 6, and a connecting rod 14 having an end hinged to the crank 12 by means of a pin 15 parallel to the pin 13 and the other end hinged to the injection assembly 7. The drive mechanism 10 further comprises a transmission lever 16 hinged, at an end, to the pin 15 and, at the opposite end, to a drive handle 17 rotatably assembled on the frame 5. In use, the rotation of the handle 17 between a lifted position (Figure 2) and a lowered position (Figure 8) controls, by means of the transmission lever 16 and the toggle-joint mechanism 11, the translation of the injection assembly 7 between the retracted position and the advanced position.

Between the frame 5 and the crank 12 a spring 18 is arranged which serves as a bistable spring, in other words it makes sure that the handle 17 reaches and keeps the lifted and lowered positions.

For this purpose, an end of the spring 18 is fixed to the frame 5, while the other end is fixed to the crank 12 at a point which, when the handle 17 is in the lifted position (Figure 2), is arranged above the pin 13 such that the force of the spring 18 applied to the crank 12 results in an "opening" torque, i.e. a torque that tends to make the handle 17 rotate towards the lifted position; and, when the handle 17 is in the lowered position (Figure 8), it is arranged below the pin 13 such that the force of the spring 18 applied to the crank 12 results in a "closure" torque, i.e. a torque that tends to make the handle 17 rotate towards the lowered position.

According to a non-illustrated variant, the drive mechanism 10 is not manual but automatized and comprises, for example, a rotative actuator coupled to the toggle-joint mechanism 11 or a linear actuator directly coupled to the injection assembly 7.

According to what illustrated in Figure 2, the extraction assembly 8 and the injection assembly 7 define respective brewing half-chambers 19 and 20, which are conformed to mutually define, when the brewing device 1 is in the closed position, a brewing chamber having a shape complimentary to that of the central body 3 and of the pod 2.

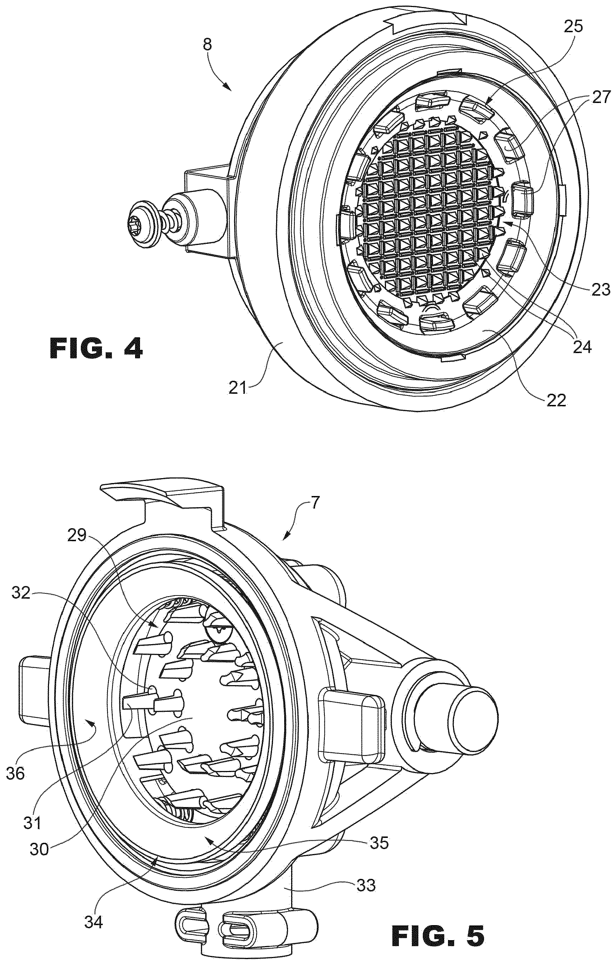

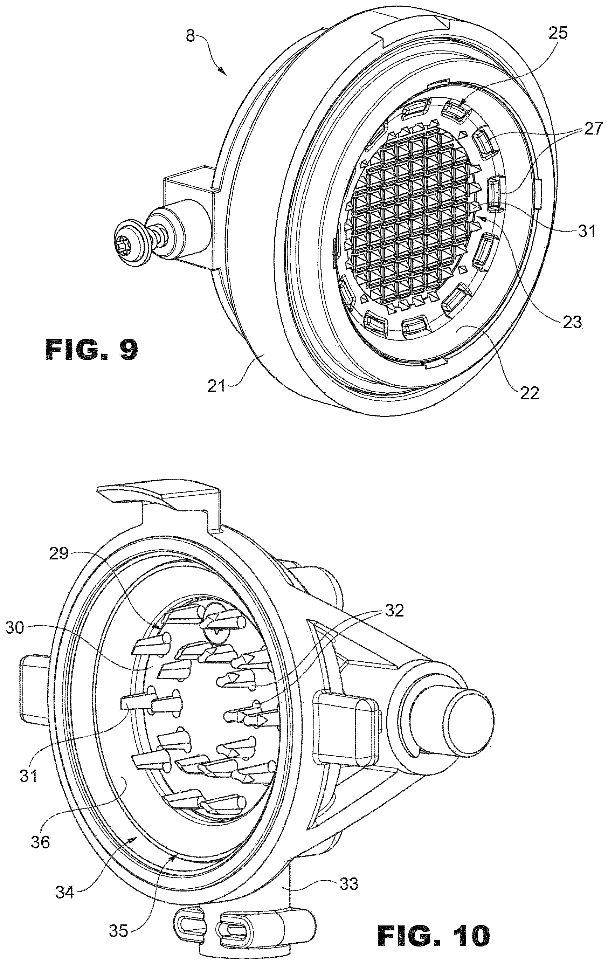

In particular, according to what illustrated in figures 2, 8 and, in greater detail, in figures 4 and 9, the brewing half-chamber 19 of the extraction assembly 8 is obtained in a cup-shaped body 21 arranged with its concavity towards the injection assembly 7 and is defined by a cavity coaxial to the axis 6, directed towards the injection assembly 7 and having a shape that is substantially complimentary to the half of the central body 3 of the pod 2, in relation to the plane passing through the flange 4.

According to the preferred embodiment illustrated in the enclosed figures, the brewing half-chamber 19 is formed by a concave insert 22 arranged at the open end of the concavity of the cup-shaped body 21 and delimited by a bottom surface, preferably perpendicular to the axis 6 and by a curved annular side wall.

The extraction assembly 8 further comprises a piercing device 23 adapted to pierce the pod 2 when the latter is closed in the brewing chamber, to allow extracting the beverage. The piercing device 23 is supported by the concave insert 22 and comprises a plurality of piercing spikes 24 protruding from the bottom surface of the concave insert 22 to the injection assembly 7. Piercing spikes 24 are full tips and can be of any shape adapted to the object such as, for example, a pyramid shape, as in the case illustrated in the enclosed figures. The concave insert 22 further has a plurality of pass-through holes, distributed in the bottom surface between piercing spikes 24 and adapted to convey the beverage extracted from the pod 2 to a collecting chamber obtained in the cup-shaped body 21 and fluidically communicating with the outlet duct 9.

According to what illustrated in detail in figures 4 and 9, the extraction assembly eventually comprises a segmented centering/extracting device 25 intended to ease the centering of the pod 2 in the brewing half-chamber 19 when the brewing device 1 is closed and the exhausted pod 2 is detached from the piercing device 23 when the brewing device 1 returns to the open position at the end of the beverage dispensing step.

The segmented centering/extracting device 25 is defined by a ring 26 (figures 2, 6, 7 and 8), elastically assembled between the cup-shaped body 21 and the concave insert 22, and by a plurality of protruding elements 27 which are integral with the ring 26, are evenly distributed around the axis 6 and extend slidably, in a direction that is parallel to the axis 6, through corresponding slots obtained in the concave insert 22.

The protruding elements 27 are configured to assume a normal extracted or protruding position, wherein they extend inside the brewing half-chamber 19 and form a crown of protruding elements 27 all around the piercing device 23 (Figure 4), and a forced retracted or re-entrant position, in which the protruding elements 27, following insertion of the pod 2 in the brewing half-chamber 19, are pushed backwards in corresponding slots towards the bottom of the cup-shaped body 21 so as to no longer project within the brewing half-chamber 19 (Figure 9).

When the brewing device 1 is re-opened, and the pod 2 in no longer forced in the half-chamber 19 by the injection assembly 7, the protruding elements 27 elastically return to their normal extracted position thereby thrusting the pod 2 in an axial direction such to cause detachment and departing from the piercing device 23.

According to what illustrated in figures 2, 8 and, in greater detail, in figures 5 and 10, the injection assembly 7 also comprises a cup-shaped body 28 arranged with its concavity towards the extraction assembly 8 and the corresponding brewing half-chamber 20 is obtained in the cup-shaped body 28 and is defined by a cavity coaxial to the axis 6, directed towards the extraction assembly 8 and having a shape that is substantially complimentary to the half of the central body 3 of the pod 2, in relation to the plane passing through the flange 4.

The brewing half-chamber 20 is provided with a piercing device 29 adapted to pierce the pod 2 when the latter is closed in the brewing chamber to allow injecting hot pressured water. The piercing device 29 comprises a disc 30 integrally coupled with the bottom of the cup-shaped body 28 and provided with a plurality of piercing spikes 31, which will be described in detail hereinafter, protruding from the disc 30 towards the inside of the brewing half-chamber 20.

The disc 30 has a plurality of holes 32 adapted to let hot pressured water supplied to the injection assembly 7 through an inlet duct 33 enter into the brewing half-chamber 20.

According to the preferred embodiment illustrated in the enclosed figures and, in detail, in figures 5 and 10, the injection assembly 7 eventually comprises an annular centering/extracting device 34 intended to ease the centering of the pod 2 in the brewing half-chamber 20 while the brewing device 1 is closed and the detachment of the exhausted pod 2 from the piercing device 29 when the brewing device 1 returns to the open position at the end of the beverage dispensing step.

The annular centering/extracting device 34 comprises an annular element 35, which is assembled, by interposing elastic means, between the piercing device 29 and the cup-shaped body 28 and has, towards the extraction assembly 8, a portion of concave bell-mouthed end 36 coaxial to the axis 6. The annular element 35 is movable parallel to the axis 6 between a normal extracted position, in which the portion of concave bell-mouthed end 36 is arranged beyond the piercing spikes 31 (Figure 5), and a forced retracted position, in which the portion of concave bell-mouthed end 36 is pushed towards the bottom of the cup-shaped body 28 from the pod 2 which occupies the brewing half-chamber 20 and it is arranged around the piercing spikes 31 such to define part of the brewing half-chamber 20 thereof (Figure 10).

When the brewing device 1 is re-opened, and the pod is no longer forced in the brewing half-chamber 20, the annular centering/extracting device 34 returns, upon thrusting by the mentioned elastic means, to the normal extracted position thrusting the pod 2 in the axial direction so as to cause detachment and departing of the pod 2 from the piercing device 29.

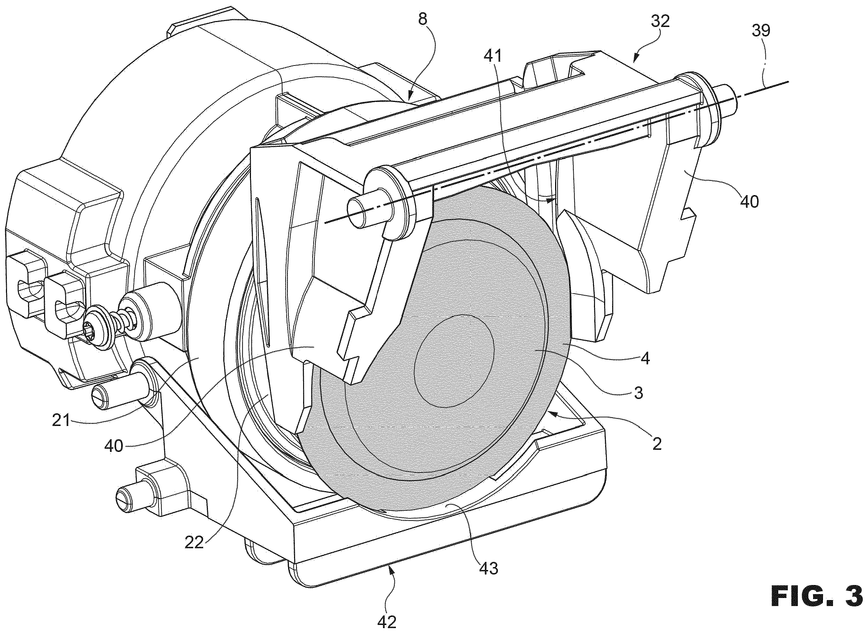

Referring to figures 1, 2 and 3, the brewing device 1 further comprises a pod support device 37, which is arranged between the injection assembly 7 and the extraction assembly 8 and it is configured to receive and retain a new pod 2, which, in use, is supplied by gravity through an insertion opening 38 formed in the frame 5 or in an external cover supported by the frame 5.

The pod support device 37 is mounted on the frame 5 to rotate around an axis 39 that is horizontal and transverse to axis 6 between a pod retention position, wherein the pod support device 37 faces injection and extraction assemblies 7 and 8 and is able to retain a pod 2 in a loading position (Figure 2), and a disengagement position, wherein the pod support device 27 is rotated upwards around the axis 39 and no longer contributes to support the pod 2, which is being delivered to injection and extraction assemblies 7 and 8 (Figure 8).

In particular, the axis 39 is arranged above the injection assembly 7 and extraction assembly 8, and the pod support device 37 comprises two plates 40 arranged at opposite sides of the axis 6 and mutually connected by means of an upper crossbeam 41.

The plates 40 have, on corresponding inner surfaces directed one towards the other and towards the axis 6, corresponding grooves 41, which are specular with respect to a vertical longitudinal plane passing through the axis 6 and are configured to be engaged, in use, by the flange 4 of a pod 2 supplied from above through the insertion opening 38.

The grooves 41 have on the bottom a curved portion which defines a transverse shoulder that is configured to retain the pod 2 in the said loading position, but that can be easily trespassed by the flange 4 itself when the pod support device 37 is rotated upwards. In this step, in fact, as we will see later on, while the pod support device 37 moves towards the disengagement position and takes the pod 2 to the brewing half-chamber 19, the flange 4 disengages from the pod support device 37 due to the flexibility of the pod 2 which slightly deforms at its major diameter to let the pod support device 37 be free to slip upwards and allow the pod 2 to stay between the brewing half-chambers 19 and 20.

According to what illustrated in Figure 2, the plates 40 are arranged between the axis 39 and the extraction assembly 8 and the grooves 41 are arranged at the half-chamber 19.

In use, as we will better see hereinafter, the pod support device 37 is moved from the pod retention position to the disengagement position by a rotation, around the axis 39, of the pod support device 37 towards the extraction assembly 8, so as to determine grooves 41 approach the brewing half-chambers 19.

The movement of the pod support device 37 from the pod retention position to the disengagement position may be made by means of a devoted actuator or, as in the example illustrated in the enclosed figures, by the injection assembly 7, which, advancing towards the extraction assembly 8 while closing the brewing device 1, intercepts the pod support device 37 and provides an axial thrust which determines the rotation of the pod support device 27 around the axis 39.

When the brewing device 1 is re-opened the pod support device 37 moves from the disengagement position to the pod retention position due to its weight, possibly assisted by return elastic means.

According to what illustrated in figures 1, 2 and 3, in a preferred embodiment, the brewing device 1 further comprises an auxiliary pod support device 42, which is arranged below the pod support device 37 and is intended to cooperate with the latter to support the pod 2 from below when this is in the loading position. Even though the auxiliary pod support device 42 is optional given that the pod support device 37 is able by itself to support the pod 2 in the loading position, its function is particularly advantageous in the step of inserting the pod 2, especially in the case of pods with a relatively high mass, as it prevents, thanks to the kinetic energy generated in the free-falling motion, the pod 2 to overcome grooves 41 and slide outside the pod support device 37.

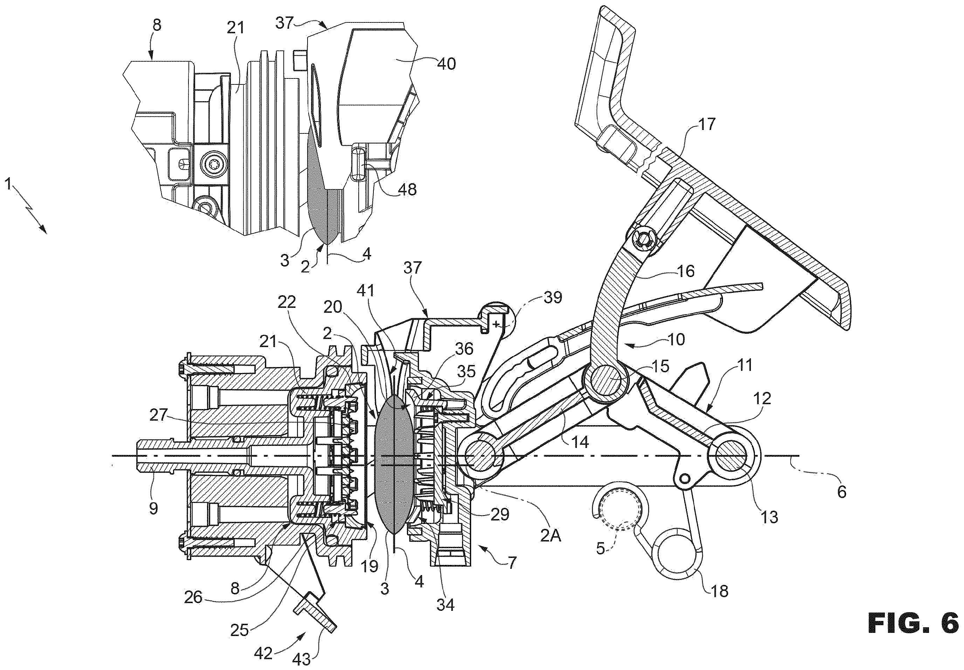

The auxiliary pod support device 42 comprises a bracket 43 which extends below the pod support device 37 transverse to the axis 6 so as to define a support for the flange 4 of a pod 2 engaged between the grooves 41. The bracket 43 is rotatably mounted on the frame 5 to move between an operative position (Figure 2), wherein it is able to support a pod 2 from the bottom, and an inoperative position (figures 6, 7 and 8), wherein it is rotated downwards and leaves free the space underlying the pod support device 37 and the brewing half-chamber 19 so as to fail interfering with the falling of the pod 2 when the brewing device is re-opened at the end of the extraction process.

The bracket 43 can be automatically driven by means of a devoted actuator or it can be manually driven, such as in the example illustrated in the enclosed figures, by a lever transmission mechanism configured to transmit the handle 17 movement to the bracket 43 such that the bracket 43 is in the operative position when the handle 17 is in the lifted position and moves towards the inoperative position as soon as the handle 17 is rotated towards the downward position.

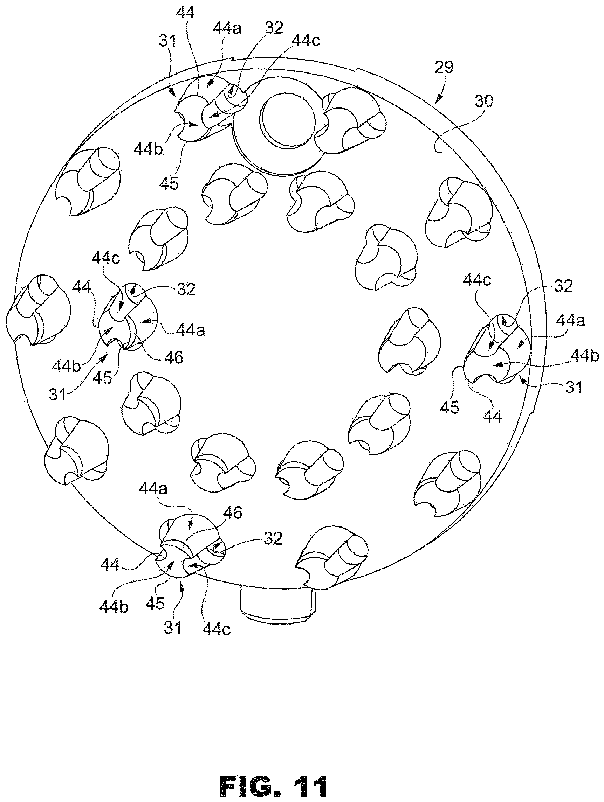

Figures 11, 12 and 13 illustrate in detail the piercing device 29 of the injection assembly 7.

In addition to what previously set forth, it can be appreciated from figures 11 - 13 that the piercing spikes 31 protruding from the disc 30 have the shape of blunt tips, limited at the sides by a side surface 44a and at the top by a top surface 44b, which defines, with the side surface 44a, a cutting edge 44.

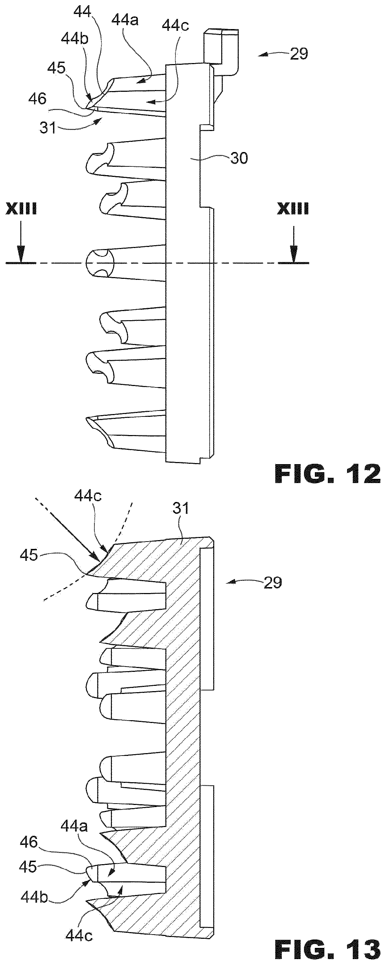

According to what illustrated in Figure 13, the top surface 44b of each piercing spike 31 is concave towards the outer piercing spike 31 itself.

Each piercing spike 31 is generally shaped as a solid obtained supposing to remove from the side surface of a section of a right cone two portions, that are specular with respect to a plane passing through the longitudinal axis of the cone section and delimited by corresponding concave surfaces 44c, which, preferably, extend throughout the height of the piercing spike 31.

Conveniently, the concave surfaces 44c of each piercing spike 31 are the intersection surfaces which would result from interpenetrating the cone section with two cylinders or virtual cones symmetrically arranged at opposite sides of the piercing spike 31.

Each piercing spike 31 is further associated with a pair of the aforesaid holes 32, which are symmetrically arranged at the sides of the piercing spikes 31 and each of them is partially delimited by one of the said concave surfaces 44c.

In other words, each pair of holes 32 associated with a piercing spike 31 can be considered as the holes resulting from interpenetrating the disc 30 into the aforesaid cylinders or virtual cones that interpenetrate into the truncated-cone piercing spike 31. Preferably, the concave surfaces 44c are conical surfaces, with a conicity reversed with respect to that of the truncated-cone surface and, consequently, holes 32 are tapered holes, with transverse section increasing towards the top of the piercing spike 31.

The shape of the top surface 44b, instead, can be considered as the result of the intersection between the piercing spike 31 with a spherical surface whose centre is arranged on the same side of piercing spikes 31 with respect to the disc 30 (Figure 13).

Consequently, the cutting edge 44 has a generally bilobate shape, delimited by two convex portions separated by two symmetrical concave portions.

This configuration allows to obtain a significantly acute cutting edge 44, which is particularly advantageous in case the casing material of the pod 2 is relatively strong, for example an aluminium and/or a relatively thick aluminium and plastic sheet.

The top surface 44b is arranged asymmetrically with respect to the piercing spike 31, i.e. the spherical concavity defined by the top surface 44b is not centered with respect to the longitudinal axis of the piercing spike 31. It follows that the top surface 44b is oblique with respect to the piercing spike 31 axis and one of the convex portions of the cutting edge 44 defines a cutting tip 45.

The concave and asymmetric shape of the top surface 44b allows to obtain an aggressive cutting dynamics and a concentration of the compression strains of the coffee powder on the central axis of the piercing spike 31, partially offsetting the side deviations due to the shape of the pod 2.

Preferably, in order to improve the strength of the cutting edge 44 and move the cutting tip 45 towards the axis of the piercing spike 32, the top surface 44b is connected to the side surface 44a, at the cutting tip 45, by a convex radial joint 46.

The piercing spikes 31 have heights that differ from each other, increasing from the centre to the periphery of the disc 30, such to provide the piercing device 29 with a concave profile that is almost complimentary to the convex profile of the pod 2 so that holes made by the piercing spikes 31 in the pod 2 have a depth as much similar between them as possible. Furthermore, for a better penetration uniformity, the piercing spikes 31 are distributed on the disc 30 along two concentric circles and are oriented such that all the cutting tips 45 are directed towards the centre of the disc 30 (Figure 11).

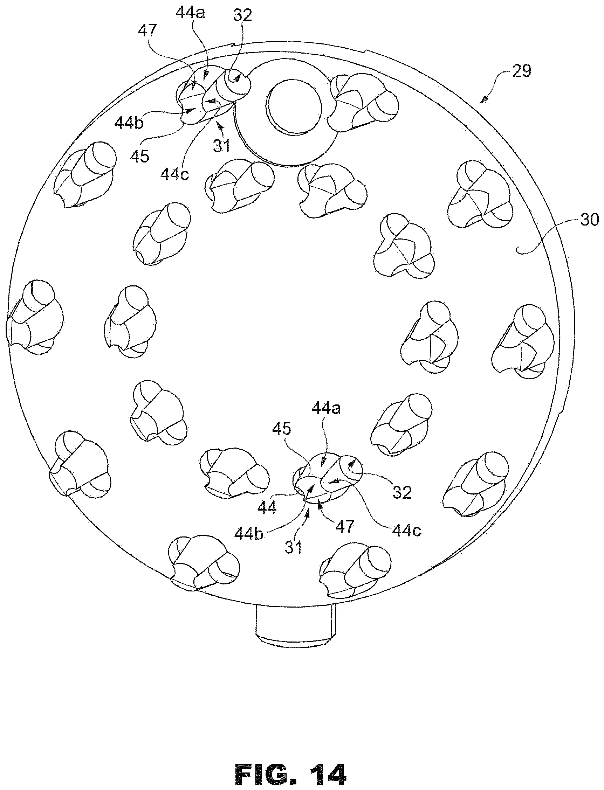

Figures 14, 15 and 16 illustrate in detail an alternative embodiment of the piercing device 29 of the injection assembly 7 which differs from the piercing device 29 described with reference to figures 11 - 13, as for the shape of the piercing spikes 31.

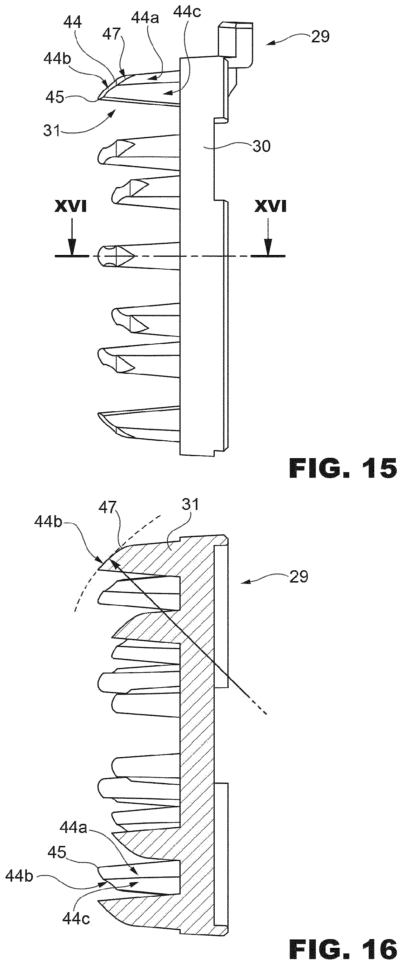

In this case also, the piercing spikes 31 have the shape of cones that are limited at the top by a curved top surface 44b. However, in this case, the top surface 44b of each piercing spike 31 is not concave but outwardly convex and can be considered as the result of the intersection between the piercing spike 31 with a spherical surface whose centre is arranged on the side opposite to the piercing spikes 31 with respect to the disc 30 (Figure 16).

As in the previously described case, in this case also the top surface 44b is arranged asymmetrically with respect to the piercing spike 31, i.e. the spherical concavity defined by the top surface 44b is not centered with respect to the longitudinal axis of the piercing spike 31.

Preferably, at the convex portion of the cutting edge 44 opposite to the cutting tip 45, the top surface 44b is jointed to the side surface 44a by a convex radial joint 47 having a curve that is different with respect to the curve of the top surface 44b. In this case, therefore, the top surface 44b has a generally toroidal profile which joins tangent to the side surface 44a of the piercing spike 31. The double curve has the function to convey to the centre of the piercing spike 31 the result of compression forces thereby encouraging the post-compression of the coffee powder.

The evolving shape of the piercing spike 31, generated by the revolution of the inner profile, allows to obtain a piercing and opening dynamics with a non-linear progression.

This geometry allows downgrading deformation coefficients of the film while increasing depth of penetration of the piercing spikes 31 in the pod 2. This conformation is particularly advantageous in case the casing of the pod 2 is made of relatively low resistant material as it prevents the casing from tearing at the hole formed, but a flap always stays attached.

As in the previous case, in this one also, each piercing spike 31 is complemented with a pair of tapered holes 32 and the piercing spikes 31 have a height different between each other, that increases from the centre to the periphery of the disc 30, so as provide the piercing device 29 with a concave profile almost complimentary to the convex profile of the pod 2 so as to make holes in the pod 2 having a substantially uniform depth.

Eventually, in this case also, in order to obtain a better penetration uniformity, the piercing spikes 31 are distributed on the disc 30 along two concentric circles and are oriented such that all the cutting tips 45 are directed towards the centre of the disc 30 (Figure 14).

To complete what set forth above, it is worth noting that, according to a non-illustrated variant, the position of injection 7 and extraction 8 assemblies may be reversed such that the injection assembly 7 is fixed and the extraction assembly 8 is movable from and to the injection assembly 7. In this case, the pod support device 37 would release the pod 2 into the half-chamber 20 of the injection assembly 7.

The functioning of the brewing device 1 will be hereinafter described referring in particular to figures 2, 6, 7 and 8 which describe the relevant steps of a beverage producing step starting from loading a pod to dispensing a beverage.

### FIGURE 2 - CONFIGURATION OF LOADING THE POD

In this configuration the handle 17 is in the lifted position and leaves the insertion opening 38 free to allow introducing a new pod 2 into the pod support device 37, which is arranged in the pod support position.

The flange 4 of the pod 2 slidably engages the grooves 41 until the pod 2 stops in the loading position, where it faces the brewing half-chamber 19 of the extraction assembly 8 and is supported laterally by the pod support device 37 and at the bottom from the bracket 43.

Preferably, the pod support device 37 is configured to retain the pod 2 in a position that is non-centered with respect to the brewing half-chamber 8, i.e. in a position wherein the axis 2A of the pod 2 is arranged below the axis 6 of the brewing device 1. Preferably, the grooves 41 are configured to support the pod 2 such that the axis 2A of the latter is substantially horizontal and parallel to axis 6.

The position of the pod 2 that is non-centered and lowered with respect to the brewing half-chamber 19 has the function to offset the following lifting of the pod 2 generated by the pod support device 37 upward rotation in the following steps of closing the brewing device 1.

Conveniently, the deviation between the axis 2A of the pod 2 and the axis 6 is of about 2.5 mm.

According to a different non-illustrated embodiment, the pod 2 is retained in a position that is coaxial to the axis 6 and a contrast element is provided to avoid the following lifting thereof during the rotation in the pod support device 37.

Finally, in the loading configuration, either the segmented centering/extracting device 25, and the annular centering/extracting device 34 are in the corresponding extracted positions.

### FIGURE 6: CONFIGURATION OF FIRST CONTACT BETWEEN POD SUPPORT DEVICE AND INJECTION ASSEMBLY

When the handle 17 is moved towards its lowered position, the injection assembly 7 leaves its retracted position and translates along the axis 6 towards its advanced position.

At a certain point of this advancement, the injection assembly 7 contacts the pod support device 37 by means of two side attachments of the injection assembly 7 (Figure 6, detail) which engage corresponding portions of the plates 40 of the pod support device 37. The injection assembly 7 approaches the support device 37 consequently resulting in the half-chamber 20 approaching the pod 2.

In this configuration of first contact between the pod support device 37 and the injection assembly 7, the pod support device 37 is still in the initial pod retention position, the auxiliary pod support device 42 has moved towards the inoperative position, and either the segmented centering/extracting device 25 and the annular centering/extracting device 34 are still in the corresponding extracted positions.

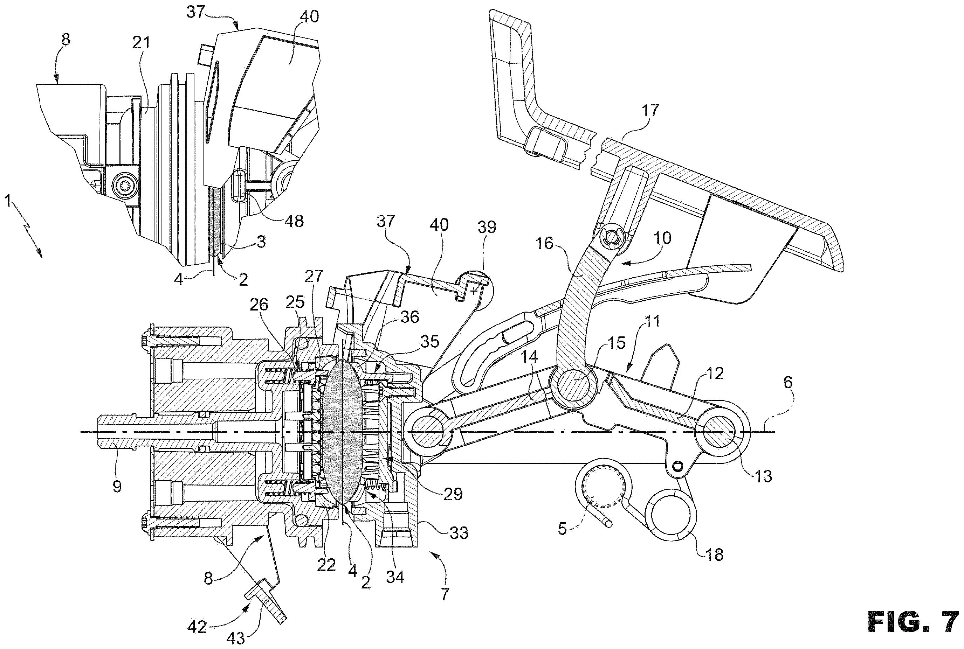

### FIGURE 7: CONFIGURATION OF DETACHING THE POD FROM THE POD SUPPORT DEVICE

As a response to a further advancement of the injection assembly 7 and to the consequent thrust provided to the plates 40 by the two side attachments 48, the pod support device 37 rotates upwards around the axis 39 determining the lifting upwards of the pod 2 and, concurrently, the insertion of the pod 2 in the half-chamber 19, with flexion of the flange 4 and its progressive disengagement from the grooves 41.

After the pod support device 37 has performed a determined rotation angle, preferably of about 11°, the pod support device 37 stops supporting the pod 2 which is inserted in the half-chamber 19 with its own axis 2A substantially coincident with axis 6.

In this configuration, the pod 2 is substantially in the brewing position, i.e. in the position it will take when the injection assembly 7 terminates its stroke and couples with the brewing assembly 8 pressing the flange 4 between them such to obtain a fluid-tight coupling.

According to what illustrated in Figure 7, in this configuration, the central body 3 of the pod 2 is supported on the piercing spikes 24 of the piercing device 23, which is still in the extracted position, and on the protruding elements 27 of the segmented centering/extracting device 25, also in the extracted position.

The pod 2, once left by the pod support device 37, is kept still in the brewing half-chamber 19 by the passive contrasting action exerted by the injection assembly 7, in particular by the annular centering/extracting device 34 37, arranged in its extracted position.

In other words, the insertion of the pod 2 inside the brewing half-chamber 19 is carried out by the pod support device 37, while the injection assembly 7, in particular the annular centering/extracting device 34, does not actively contribute to the insertion of the pod 2 into the brewing half-chamber 19, i.e. it does not substantially provide any axial thrust to the pod 2 while this is still retained by the pod support device 37, but it only exerts a passive contrasting action when the pod 2 is left by the pod support device 37 in the brewing half-chamber 19.

It follows that the movement of the pod 2 from the loading position to the brewing position occurs without submitting the pod 2 to axial stresses, in particular by the injection assembly 7. As a consequence the risk that the pod 2 undergoes significant deformations in the step of closing the brewing chamber, which may jeopardize the beverage extraction process and the discharge of the exhausted pod is removed, or at least minimized.

### FIGURE 8: CONFIGURATION OF BREWING AND DISPENSING

A further movement of the handle 17 towards the lowered position determines a further rotation of the pod support device 37, preferably of another 4-5°, and the advancement of the injection assembly 7 with consequent insertion of the pod 2 into the brewing half-chamber 20, retraction of the annular element 35 of the centering/extracting device 34 and penetration of the piercing spikes 31 in the central body 3 of the pod 2.

When the handle 17 reaches the lowered position, the end surface of the injection assembly 7 and the end surface of the extraction assembly 8 clamp the flange 4 of the pod 2 therebetween and tightly close the brewing chamber formed by the brewing half-chambers 19 and 20 and containing the pod 2.

It is worth noting that the brewing chamber closure determined by this last movement of the injection assembly 7 does not substantially modify the previous pod 2 position, in particular of the central body 3 of the pod 2, which remains supported on piercing spikes 24 and on protruding elements 27, while it is being pierced, on the opposite side, by piercing spikes 31.

The flange 4, axially thrust by the injection device, undergoes a slight flexion towards the extraction assembly 8 and is thus pressed between the two assemblies.

Now, hot pressured water is supplied to the brewing chamber through the inlet duct 33.

The pod 2 imbibition causes the swelling of the pod 2, which thrusts the protruding elements 27 towards their retracted position and is penetrated by the piercing spikes 24, letting the extracted beverage outflow from the pod 2 and thus flow outside the extraction assembly 8 via the outlet duct 9.

When dispensing is over and the handle 17 is returned in the lifted position, the injection assembly 7 departs from the extraction assembly 8 and the pod 2 falls downwards by gravity. The pod 2 effectively detaches from the piercing devices 23 and 29 thanks to the segmented centering/extracting device 25 and annular centering/extracting device 34.

Either the annular element 35 of the annular centering/extracting device 34, and the protruding elements 27 of the segmented centering/extracting device 25 have the advantage to provide the pod 2 with an axial thrust along an annular portion of the pod 2.

In particular, as regards the conformation of the segmented centering/extracting device 25, the fact that the thrust to the pod 2 is imparted by crown-like arranged discreet members such as the protruding elements 27 leads to the following advantages:
- unlike what a single extractor could do, protruding elements 27 allow to evenly distribute the thrust force and therefore do not risk to damage or even tear the pod 2 while extracting coffee, when the pod 2 is damp, especially in case of pods made of poorly resistant materials, such as biodegradable materials;
- the provision of the crown-like arranged protruding elements 27 sliding through corresponding slots of the bottom of the brewing half-chamber 19 makes it possible to manufacture the rest of the brewing half-chamber 19 in a single piece, the concave insert 22, to the entire benefit of uniformity of the surface supporting the pod 2;
- the presence of slots and the elastic assembling of the protruding elements 27 makes it possible to create in the brewing half-chamber 19 expansion areas for the pod 2 when it absorbs hot pressured water. It is thereby possible to conform the concave surface of the brewing half-chamber 19 in such a way as to reproduce the pod 2 convexity with relative precision and give protruding elements 27 the function to define, in respective eyelets, expansion areas for the pod 2 which undergoes a natural, though minimum, swelling when injected with water;
- the position of the protruding elements 27, which are arranged so as to engage a peripheral edge of the central body 3 of the pod 2, avoids "obscuring" the central area of the pod 2 from which the beverage mostly outflows and therefore avoids a reduction of the outlet flow section, as it would happen, for example, in case a single central extractor was provided.

## Claims

1. A brewing device (1) for producing a beverage from a single-serve cartridge (2) in the form of a capsule or a pod;
the brewing device (1) comprises:
two functional assemblies (7, 8) defining respective brewing half-chambers (20, 19) and mutually movable along a longitudinal axis (6) between an open configuration, in which the two brewing half-chambers (20, 19) mutually define a space for loading a cartridge (2), and a closed configuration, in which the two brewing half-chambers (20, 19) mutually define a brewing chamber for the pod (3); one of said functional assemblies (7, 8) is a water injection assembly and the other is a beverage extraction assembly;
at least one of the functional assemblies (7, 8) comprises:
a main body (21);
an insert (22) integral to the main body (21), coaxial to the longitudinal axis (6), and delimiting at least a central portion of the associated brewing half-chamber (19); and
a pusher (25) to push the cartridge (2) out of the brewing half-chamber (19) when the brewing device (1) returns to the open configuration at the end of a beverage extraction process;
the pusher (25) is mounted between the main body (21) and the insert (22) and comprises a plurality of pushing members (27) distributed around the longitudinal axis (6);
the pusher (25) is mounted to move, along the longitudinal axis (6), against the trust of elastic return means, from an advanced rest position, in which the pushing members (27) protrude inside the brewing half-chamber (19), to a forced retracted position, in which the pushing members (27) fail to protrude inside the brewing half-chamber (19);
**characterized in that** the pushing members (27) are crown-like arranged around the longitudinal axis (6) so as to engage a corresponding peripheral portion of the cartridge (2).

2. The brewing device of claim 1, wherein the insert (22) carries a cartridge perforator (23) comprising a plurality of perforating members (24) protruding inside the brewing half-chamber (19); the pushing members (27) are configured to protrude, in the advanced rest position, inside the brewing half-chamber (19) beyond the perforating members (24) so that the movement of the pushing members (27) from the forced retracted position to the advanced rest position results in the pushing members (27) pushing the cartridge (2) away from the perforating elements (24).

3. The device according of claim 1 or 2, wherein the insert (22) has a concave shape and delimits, in addition to the central portion of the brewing half-chamber (19), also an annular peripheral portion of the brewing half-chamber (19) contiguous to the central portion; the insert (22) is provided with a plurality of slots slidably engaged by respective pushing members (27).

4. The device of claim 3, wherein the slots are formed in a circular area of the insert (22) coaxial to the longitudinal axis (6) and arranged between the central portion and the annular peripheral portion of the brewing half-chamber (19).

5. The device of claim 4, wherein the pushing members (27) and the corresponding slots are uniformly distributed around the longitudinal axis (6).

6. The device of any one of the preceding claims, wherein the functional assembly provided with the pusher (25) is the beverage extraction assembly (8).

7. The device of any one of the preceding claims, wherein the pushing members (27) are shaped and arranged in the brewing half-chamber (19) so as to act as centring devices to centre the cartridge (2) inside the brewing half-chamber (19).

## Patentansprüche

1. Brühvorrichtung (1) zum Zubereiten eines Getränks aus einer Single-Serve-Kartusche (2) in Form einer Kapsel oder eines Pods;
wobei die Brühvorrichtung (1) aufweist:
zwei Funktionsanordnungen (7, 8) die jeweilige Brüh-Halbkammern (20, 19) definieren und jeweils entlang einer Längsachse (6) zwischen einer offenen Konfiguration, in welcher die beiden Brüh-Halbkammern (20, 19) einen Raum zum Einsetzen einer Kartusche (2) definieren, und einer geschlossenen Konfiguration bewegbar sind, in welcher die beiden Brüh-Halbkammern (20, 19) eine Brühkammer für den Pod (3) definieren; wobei eine der Funktionsanordnungen (7, 8) eine Wassereinspritzanordnung und
die andere eine Getränkeextraktionsanordnung ist;
wobei mindestens eine der Funktionsanordnungen (7, 8) aufweist:
einen Hauptkörper (21);
einen mit dem Hauptkörper (21) einstückig ausgebildeten Einsatz (22), der sich koaxial zur Längsachse (6) erstreckt und zumindest einen mittleren Abschnitt der zugehörigen Brüh-Halbkammer (19) begrenzt; und
einen Schieber (25) zum Herausschieben der Kartusche (2) aus der Brüh-Halbkammer (19), wenn die Brühvorrichtung (1) am Ende eines Getränkeextraktionsvorgangs in die offene Konfiguration zurückkehrt; wobei der Schieber (25) zwischen dem Hauptkörper (21) und dem Einsatz (22) angebracht ist und mehrere um die Längsachse (6) verteilte Schiebeelemente (27) aufweist;
wobei der Schieber (25) derart angebracht ist, dass er sich entlang der Längsachse (6) gegen den Druck von elastischen Rückstelleinrichtungen aus einer vorgeschobenen Ruheposition, in welcher die Schiebeelemente (27) in die Brüh-Halbkammer (19) hineinragen, in eine zwangsweise zurückgezogene Position bewegt, in welcher die Schiebeelemente (27) nicht in die Brüh-Halbkammer (19) ragen;
**dadurch gekennzeichnet, dass** die Schiebeelemente (27) kronenartig um die Längsachse (6) angeordnet sind, um an einem entsprechenden Umfangsabschnitt der Kartusche (2) anzugreifen.

2. Brühvorrichtung nach Anspruch 1, bei welcher der Einsatz (22) einen Kartuschenperforator (23) trägt, der mehrere Perforationselemente (24) aufweist, die in die Brüh-Halbkammer (19) vorstehen; wobei die Schiebeelemente (27) derart ausgebildet sind, dass sie in der vorgeschobenen Ruheposition innerhalb der Brüh-Halbkammer (19) über die Perforationsglieder (24) hinausragen, so dass die Bewegung der Schiebeelemente (27) aus der zwangsweise zurückgezogenen Position in die vorgeschobene Ruheposition dazu führt, dass die Schiebeelemente (27) die Kartusche (2) von den Perforationselementen (24) wegdrücken.

3. Vorrichtung nach Anspruch 1 oder 2, bei welcher der Einsatz (22) eine konkave Form aufweist und, zusätzlich zum Mittelabschnitt der Brüh-Halbkammer (19), ebenfalls einen an den Mittelabschnitt angrenzenden, ringförmigen Umfangsabschnitt der Brüh-Halbkammer (19) begrenzt; wobei der Einsatz (22) mit mehreren Schlitzen versehen ist, die verschiebbar in Eingriff mit entsprechenden Schiebeelementen (27) sind.

4. Vorrichtung nach Anspruch 3, bei welcher die Schlitze in einem kreisförmigen Bereich des Einsatzes (22) koaxial zur Längsachse (6) ausgebildet und zwischen dem Mittelabschnitt und dem ringförmigen Umfangsabschnitt der Brüh-Halbkammer (19) angeordnet sind.

5. Vorrichtung nach Anspruch 4, bei welcher die Schiebeelemente (27) und die entsprechenden Schlitze gleichmäßig um die Längsachse (6) verteilt sind.

6. Vorrichtung nach einem der vorhergehenden Ansprüche, bei welcher die mit dem Schieber (25) versehene Funktionsanordnung die Getränkeextraktionsanordnung (8) ist.

7. Vorrichtung nach einem der vorhergehenden Ansprüche, bei welcher die Schiebeelemente (27) in der Brüh-Halbkammer (19) derart geformt und angeordnet sind, dass sie als Zentriervorrichtungen zum Zentrieren der Kartusche (2) innerhalb der Brüh-Halbkammer (19) dienen.

## Revendications

1. Dispositif d'infusion (1) pour produire une boisson à partir d'une cartouche à portion individuelle (2) se présentant sous la forme d'une capsule ou d'une dosette ;
le dispositif d'infusion (1) comprend :
deux ensembles fonctionnels (7, 8) définissant des demi-chambres d'infusion (20, 19) respectives et mutuellement mobiles le long d'un axe longitudinal (6) entre une configuration ouverte dans laquelle les deux demi-chambres d'infusion (20, 19) définissent mutuellement un espace pour charger une cartouche (2) et une configuration fermée dans laquelle les deux demi-chambres d'infusion (20, 19) définissent mutuellement une chambre d'infusion pour la dosette (3) ; l'un desdits ensembles fonctionnels (7, 8) est un ensemble d'injection d'eau et l'autre est un ensemble d'extraction de boisson ;
au moins l'un des ensembles fonctionnels (7, 8) comprend :
un corps principal (21) ;
un insert (22) solidaire du corps principal (21), coaxial par rapport à l'axe longitudinal (6), et délimitant au moins une partie centrale de la demi-chambre d'infusion (19) associée ; et
un poussoir (25) pour pousser la cartouche (2) hors de la demi-chambre d'infusion (19) lorsque le dispositif d'infusion (1) revient à la configuration ouverte à la fin d'un processus d'extraction de boisson ;
le poussoir (25) est monté entre le corps principal (21) et l'insert (22) et comprend une pluralité d'éléments de poussée (27) répartis autour de l'axe longitudinal (6) ;
le poussoir (25) est monté pour se déplacer, le long de l'axe longitudinal (6), contre la poussée des moyens de rappel élastique, à partir d'une position de repos avancée dans laquelle les éléments de poussée (27) font saillie à l'intérieur de la demi-chambre d'infusion (19), jusqu'à une position rétractée forcée dans laquelle les éléments de poussée (27) n'arrivent pas à faire saillie à l'intérieur de la demi-chambre d'infusion (19) ;
**caractérisé en ce que** les éléments de poussée (27) sont agencés en forme de couronne autour de l'axe longitudinal (6) afin de mettre en prise une partie périphérique correspondante de la cartouche (2).

2. Dispositif d'infusion selon la revendication 1, dans le lequel l'insert (22) porte un perforateur de cartouche (23) comprenant une pluralité d'éléments de perforation (24) faisant saillie à l'intérieur de la demi-chambre d'infusion (19) ; les éléments de poussée (27) sont configurés pour faire saillie, dans la position de repos avancée, à l'intérieur de la demi-chambre d'infusion (19) au-delà des éléments de perforation (24) de sorte que le mouvement des éléments de poussée (27) de la position rétractée forcée à la position de repos avancée se traduit par le fait que les éléments de poussée (27) poussent la cartouche (2) en éloignement des éléments de perforation (24).

3. Dispositif selon la revendication 1 ou 2, dans lequel l'insert (22) a une forme concave et délimite, en plus de la partie centrale de la demi-chambre d'infusion (19), également une partie périphérique annulaire de la demi-chambre d'infusion (19) contiguë à la partie centrale ; l'insert (22) est prévu avec une pluralité de fentes mises en prise de manière coulissante par des éléments de poussée (27) respectifs.

4. Dispositif selon la revendication la revendication 3, dans lequel les fentes sont formées dans une zone circulaire de l'insert (22) coaxiale à l'axe longitudinal (6) et agencées entre la partie centrale et la partie périphérique annulaire de la demi-chambre d'infusion (19).

5. Dispositif selon la revendication 4, dans lequel les éléments de poussée (27) et les fentes correspondantes sont répartis uniformément autour de l'axe longitudinal (6).

6. Dispositif selon l'une quelconque des revendications précédentes, dans lequel l'ensemble fonctionnel prévu avec le poussoir (25) est l'ensemble d'extraction de boisson (8).

7. Dispositif selon l'une quelconque des revendications précédentes, dans lequel les éléments de poussée (27) sont formés et agencés dans la demi-chambre d'infusion (19) afin de servir de dispositifs de centrage pour centrer la cartouche (2) à l'intérieur de la demi-chambre d'infusion (19).
